# EUROPÄISCHE PATENTANMELDUNG

(11) **EP 1 935 475 A1**
(43) Veröffentlichungstag der Anmeldung: **25.06.2008**
(21) Anmeldenummer: 07022382.1
(22) Anmeldetag: 19.11.2007
(51) Int. Cl.: B01D 46/52, B01D 46/00

(54) **Filteranordnung mit einem Trennelement**

(30) Priorität: 19.12.2006 DE 102006060580
(71) Anmelder: Carl Freudenberg KG, 69469 Weinheim (DE)
(72) Erfinder: Stahl, Ulrich, 69514 Laudenbach (DE); Felber, Uwe, 69518 Absteinach (DE)

(57) **Zusammenfassung**

Eine Filteranordnung zum Filtern eines fluiden Mediums, umfassend ein Gehäuse (1), welches in einem Aufnahmeraum (2) ein Filterelement (3) aufnimmt, wobei das Filterelement (3) den Aufnahmeraum (2) in einen Anströmraum (4) und einen Abströmraum (5) aufteilt, wobei der Abströmraum (5) durch ein zumindest teilweise bewegbares Trennelement (6) in einen Primärraum (5a) und einen Sekundärraum (5b) aufgeteilt ist und wobei der Primärraum (5a) und der Sekundärraum (5b) strömungsverbindbar sind, ist im Hinblick auf die Aufgabe, eine Filteranordnung der eingangs genannten Art derart auszugestalten und weiterzubilden, dass die Luftversorgung eines Verbrennungsmotors mit kostengünstigen Mitteln auch nach längerer Betriebsdauer optimiert werden kann, dadurch gekennzeichnet, dass das Trennelement (6) eine Arbeitsfläche (6a) aufweist, an der eine durch eine zwischen Anströmraum (4) und Abströmraum (4) bestehende Druckdifferenz erzeugbare Kraft so angreifen kann, dass die Strömungsverbindung zwischen Primärraum (5a) und Sekundärraum (5b) unmittelbar über die Kraft herstellbar ist.

## Beschreibung

### Technisches Gebiet

Die Erfindung betrifft eine Filteranordnung zum Filtern eines fluiden Mediums, umfassend ein Gehäuse, welches in einem Aufnahmeraum ein Filterelement aufnimmt, wobei das Filterelement den Aufnahmeraum in einen Anströmraum und einen Abströmraum aufteilt, wobei der Abströmraum durch ein zumindest teilweise bewegbares Trennelement in einen Primärraum und einen Sekundärraum aufgeteilt ist und wobei der Primärraum und der Sekundärraum strömungsverbindbar sind.

### Stand der Technik

Filteranordnungen zum Filtern eines fluiden Mediums sind aus dem Stand der Technik bereits bekannt. Diese finden häufig in Kraftfahrzeugen Verwendung, wobei die Filterelemente der Filterung der Motorzuluft dienen. Dabei saugt der Verbrennungsmotor von einem Filterelement gefilterte Luft über einen Abströmkanal an. Die ungefilterte Luft wird der Anströmseite des Filterelements durch einen Anströmkanal zugeführt. Innerhalb des Gehäuses bilden sich jedoch unsymmetrische Strömungsverhältnisse aus, die von der Geometrie des Gehäuses und der Anordnungen der Anström- bzw. Abströmkanäle abhängen.

Eine gleichmäßige Anströmung des Filterelements ist äußerst schwierig zu realisieren, da eine Vielzahl von Parametern beachtet werden müsste.

Auf Grund der unsymmetrischen Strömungsverhältnisse innerhalb des Gehäuses wird das Filterelement inhomogen mit zu filtrierender Luft beaufschlagt. Die Folge hiervon ist eine inhomogene und ungleichmäßige Belegung des Filterelements mit Schmutzpartikeln, die aus der Luft heraus gefiltert werden. Nach einer nur sehr schwer bestimmbaren Betriebsdauer sind einzelne Bereich des Filterelements derart belegt, dass von einem gleichmäßigen Durchsatz der Luft durch das Filterelement nicht mehr die Rede sein kann. Insbesondere sind einzelne Bereiche des Filterelements derart belegt, dass nahezu keine Luft mehr durch diese Bereiche hindurch treten kann.

Verbrennungsmotoren von Kraftfahrzeugen sind in der Regel Luftmassensensoren zugeordnet, die punktuell die Strömungsverhältnisse am Abströmkanal bestimmen. Auf der Grundlage dieser punktuell erfassten Informationen errechnet eine Elektronik die Luftmenge, die dem Motor zur Verbrennung zugeführt wird. Die Ermittlung der Strömungsverhältnisse über den gesamten Querschnitt des Abströmkanals erfolgt durch Extrapolation und Kennlinien.

Hieraus erwächst das Problem, dass die Elektronik eine bekannte Verteilung der Strömungsverhältnisse voraussetzt. Nach längerer Betriebsdauer weichen die tatsächlichen Strömungsverhältnisse jedoch auf Grund unterschiedlich starker Belegungen und Zusetzungen des Filterelements von den angenommen Strömungsverhältnissen ab.

Als Folge hiervon errechnet der Luftmassensensor eine Luftmenge, die von der tatsächlichen Luftmenge abweicht. Die Verbrennung im Motor wird hierdurch erheblich gestört. Insbesondere entsteht ein Ungleich gewicht zwischen Luft und Kraftstoff.

### Darstellung der Erfindung

Der Erfindung liegt daher die Aufgabe zu Grunde, eine Filteranordnung der eingangs genannten Art derart auszugestalten und weiter zu bilden, dass die Luftversorgung eines Verbrennungsmotors mit kostengünstigen Mitteln auch nach längerer Betriebsdauer optimiert werden kann.

Die vorliegende Erfindung löst die zuvor genannte Aufgabe durch die Merkmale des Patentanspruchs 1. Danach ist eine eingangs genannte Filteranordnung dadurch gekennzeichnet, dass das Trennelement eine Arbeitsfläche aufweist, an der eine durch zwischen Anströmraum und Abströmraum bestehende Druckdifferenz erzeugbare Kraft so angreifen kann, dass die Strömungsverbindung zwischen Primärraum und Sekundärraum unmittelbar über die Kraft herstellbar ist.

Erfindungsgemäß ist zunächst erkannt worden, dass durch die Belegung einzelner Bereiche des Filterelements erhebliche Druckdifferenzen zwischen dem Anströmraum und dem Abströmraum entstehen können. Des Weiteren ist erkannt worden, dass die entstehenden Druckdifferenzen mit der Belegung des Filterelements korrespondieren. Schließlich ist erkannt worden, dass das Vorsehen einer Arbeitsfläche, an der eine Kraft unmittelbar angreifen kann, Kosten für teure elektronische Hilfsmittel zum Betätigen des Trennelements vermeidet. Insoweit ist ein kostengünstiger Aufbau der Filteranordnung sichergestellt. Schließlich ist erkannt worden, dass das Trennelement durch die Druckdifferenz, nämlich durch eine durch diese erzeugte Kraft, selbst betätigbar ist. Sobald eine bestimmte Druckdifferenz erreicht bzw. überschritten wird, greift am Trennelement eine Kraft an, welche das Trennelement bewegt und somit einen Primärraum mit einem Sekundärraum strömungsverbindet. Sobald die Strömungsverbindung zwischen Primärraum und Sekundärraum hergestellt ist, wird die dem Motor zugeführte Luft über den Bereich des Filterelements filtriert, welcher den Sekundärraum begrenzt. Da dieser Bereich des Trennelements nahezu nicht mit Schmutzpartikeln beaufschlagt ist, stellt sich eine über den gesamten Querschnitt des Abströmkanals gleichmäßige Luftströmung ein. Das von der Elektronik des Luftmassensensors vorausgesetzte Strömungsprofil ist dann tatsächlich gegeben. Insbesondere ist erkannt worden, dass das Trennelement in Abhängigkeit von der Geometrie des Gehäuses so angeordnet werden kann, dass zunächst die dem Primärraum zugeordnete Filterfläche gleichmäßig zugesetzt und sodann die dem Sekundärraum zugeordnete Filterfläche gleichmäßig zugesetzt wird. Hierdurch ist gewährleistet, dass die Motorluftversorgung über eine lange Betriebsdauer optimiert erfolgt, indem eine vollständige Nutzung der Filterfläche sichergestellt wird.

Folglich ist die genannte Aufgabe gelöst.

Das Trennelement könnte verbiegbar ausgestaltet sein. Dabei ist konkret denkbar, dass das Trennelement aus einem Metall gefertigt ist oder metallische Bereiche umfasst. Die Dicke des Metalls oder dessen Duktilität könnte so gewählt werden, dass eine Verbiegung des Trennelements bei der Einstellung bestimmter Druckdifferenzen zwischen Anströmraum und Abströmraum erfolgt. Ein verbiegbares Trennelement erlaubt eine variable Weite der Strömungsverbindung zwischen Primärraum und Sekundärraum in Abhängigkeit von den entstehenden Druckdifferenzen. Insoweit ist ein kontinuierliches Öffnungsverhalten des Trennelements realisierbar.

Das Trennelement könnte zumindest teilweise zerbrechlich ausgebildet sein. Diese konkrete Ausgestaltung erlaubt es, dem Trennelement die Funktion einer Berstscheibe zuzuordnen. Nach Auftreten einer bestimmten Druckdifferenz könnte das Trennelement aufbrechen oder abbrechen und die Strömungsverbindung zwischen Primärraum und Sekundärraum herstellen. Ganz konkret ist vor diesem Hintergrund denkbar, dass dem Trennelement Sollbruchstellen zugeordnet sind. Die Sollbruchstellen könnten als verjüngte Bereiche des Trennelements ausgestaltet sein.

Das Trennelement könnte verschwenkbar ausgestaltet sein. Ein verschwenkbares Trennelement erlaubt die Realisierung einer variablen Weite der Strömungsverbindung zwischen Primärraum und Sekundärraum. In Abhängigkeit von den Druckdifferenzen könnte das Trennelement derart verschwenkbar sein, dass eine größere Durchtrittsfläche für das zu filternde Fluid oder eine weniger große Durchtrittsfläche geschaffen wird.

Das Trennelement könnte am Gehäuse befestigt sein. Hierdurch ist sichergestellt, dass ein kommerziell erhältliches Filterelement mit dem Gehäuse zu der hier beschriebenen Filteranordnung ergänzt werden kann. Vor diesem Hintergrund ist konkret denkbar, dass das Trennelement mit einer Schwenkachse am Gehäuse befestigt ist. Das Trennelement könnte auch mittels eines verjüngten Bereichs, nämlich einer Sollbruchstelle, am Gehäuse befestigt sein. Das Trennelement könnte auch verbiegbar am Gehäuse angebracht sein.

Das Trennelement könnte am Filterelement befestigt sein. Durch diese konkrete Ausgestaltung ist es möglich, bereits bestehende Filtergehäuse mit neuartigen Filterelementen auszustatten, denen ein Trennelement zugeordnet ist. Das Trennelement könnte mit einer Schwenkachse am Filterelement befestigt sein. Denkbar ist auch, dass das Trennelement mittels eines verjüngten Bereichs, nämlich einer Sollbruchstelle, am Filterelement befestigt ist.

Das Trennelement könnte plättchen- oder scheibenförmig ausgestaltet sein. Diese Ausgestaltung erlaubt die Ausbildung eines besonders dünnen Trennelements, bei dessen Herstellung erhebliche Materialkosten gespart werden können.

Dem Trennelement könnte eine Dichteinrichtung zugeordnet sein. Insbesondere könnte die Dichteinrichtung als Dichtlippe ausgestaltet sein. Eine Dichteinrichtung erlaubt eine dichtende Anlage des Trennelements am Gehäuse oder am Filterelement und vermeidet Leckageströmungen. Die Dichteinrichtung könnte dem freien Ende des Trennelements zugeordnet sein. Hierdurch ist ein Einsetzen eines Filterelements in ein bereits bestehendes Gehäuse möglich.

Das Filterelement könnte einen Faltenbalg aufweisen. Die Verwendung eines Faltenbalgs erlaubt es, die effektiv wirksame Filterfläche zu erhöhen. Vor diesem Hintergrund ist denkbar, dass dem Faltenbalg Aktivkohlepartikel oder Aktivkohlefasern zugeordnet sind. Die Verwendung von Aktivkohlepartikeln oder Aktivkohlefasern erlaubt es, die hier beschriebene Filteranordnung auch für die Luftversorgung von Fahrzeuginnenräumen zu verwenden, da unangenehme Gerüche adsorbiert werden können.

Dem Abströmraum könnte ein Abströmkanal und dem Anströmraum ein Anströmkanal zugeordnet sein, Diese konkrete Ausgestaltung erlaubt eine Durchströmung des Gehäuses, wobei das Filterelement den Anströmraum vom Abströmraum partikeldicht abtrennt. Das Filterelement könnte im Gehäuse festgeklemmt oder festgeklebt sein. Denkbar ist auch, dass das Filterelement mit der Gehäusewandung verschweißt ist. Das Verschweißen könnte durch einen Ultraschallschweißprozeß oder Laserschweißprozeß erfolgen. Eine werksseitige Verbindung des Filterelements mit dem Gehäuse durch Verkleben oder Verschweißen erlaubt die Verwendung des Gehäuses als Einzelteil im Motor eines Kraftfahrzeugs. Hierdurch sind Fehlerquellen bei der Montage des Filterelements nahezu ausgeschlossen.

Die hier beschriebene Filteranordnung könnte in einem Kraftfahrzeug mit einem Luftmassensensor Verwendung finden. Diese Verwendung realisiert vorteilhaft eine optimierte Luftversorgung des Motors eines Kraftfahrzeugs. Eine dem Luftmassensensor zugeordnete Elektronik setzt üblicherweise eine gleichmäßige Durchströmung einer Querschnittsfläche voraus, in der der Luftmassensensor nur punktuell die Durchströmung misst. Die vorausgesetzte gleichmäßige Durchströmung ist durch das mit Kraft bewegbare Trennelement kostengünstig dauerhaft realisierbar.

Denkbar ist auch, die hier beschriebene Filteranordnung in einer Klimaanlage, insbesondere in einer Klimaanlage eines Kraftfahrzeugs, zu verwenden, um deren Luftansaugung zu optimieren. Diese Anwendung erhöht die Standzeit einer Klimaanlage erheblich.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele der erfindungsgemäßen Lehre anhand der Zeichnung zu verweisen.

In Verbindung mit der Erläuterung der bevorzugten Ausführungsbeispiele anhand der Zeichnung werden auch im allgemeinen bevorzugte Ausgestaltungen und Weiterbildungen der Lehre erläutert.

### Kurzbeschreibung der Zeichnung

In der Zeichnung zeigen
- Fig. 1: eine Filteranordnung, bei welcher ein verbiegbares Trennelement am Filterelement befestigt ist,
- Fig. 2: eine Filteranordnung, bei welcher ein biegsames Trennelement am Gehäuse befestigt ist und
- Fig. 3: eine Filteranordnung, bei welcher ein verschwenkbares Trennelement am Filterelement befestigt ist.

### Ausführung der Erfindung

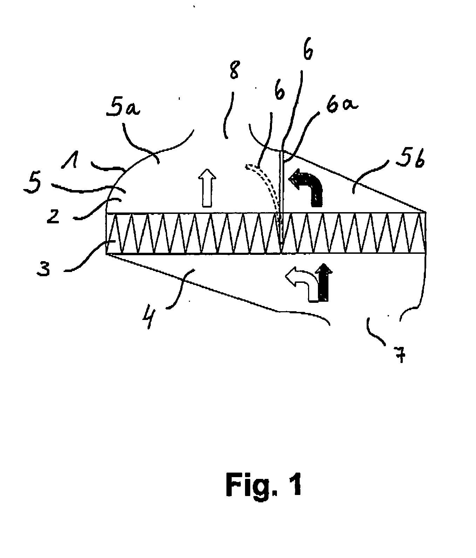

Fig. 1 zeigt eine Filteranordnung zum Filtern eines fluiden Mediums, nämlich Luft für den Motor eines Kraftfahrzeugs. Die Filteranordnung umfasst ein Gehäuse 1, welches in einem Aufnahmeraum 2 ein Filterelement 3 aufnimmt. Das Filterelement 3 teilt den Aufnahmeraum 2 in einen Anströmraum 4 und einen Abströmraum 5 auf. Die Aufteilung des Aufnahmeraums 2 erfolgt derart, dass der Anströmraum 4 vom Abströmraum 5 schmutzpartikelldicht abgetrennt ist. Das Filterelement 3 könnte an der Innenwandung des Gehäuses 1 festgeklebt oder angeschweißt sein. Der Abströmraum 5 ist durch ein zumindest teilweise bewegbares Trennelement 6 in einen Primärraum 5a und einen Sekundärraum 5b aufgeteilt. Der Primärraum 5a und der Sekundärraum 5b sind strömungsverbindbar, wenn das Trennelement 6 bewegt wird.

Das Trennelement 6 weist eine Arbeitsfläche 6a auf, an der eine durch eine zwischen Anströmraum 4 und Abströmraum 5 bestehende Druckdifferenz erzeugbare Kraft so angreifen kann, dass die Strömungsverbindung zwischen Primärraum 5a und Sekundärraum 5b unmittelbar über die Kraft herstellbar ist.

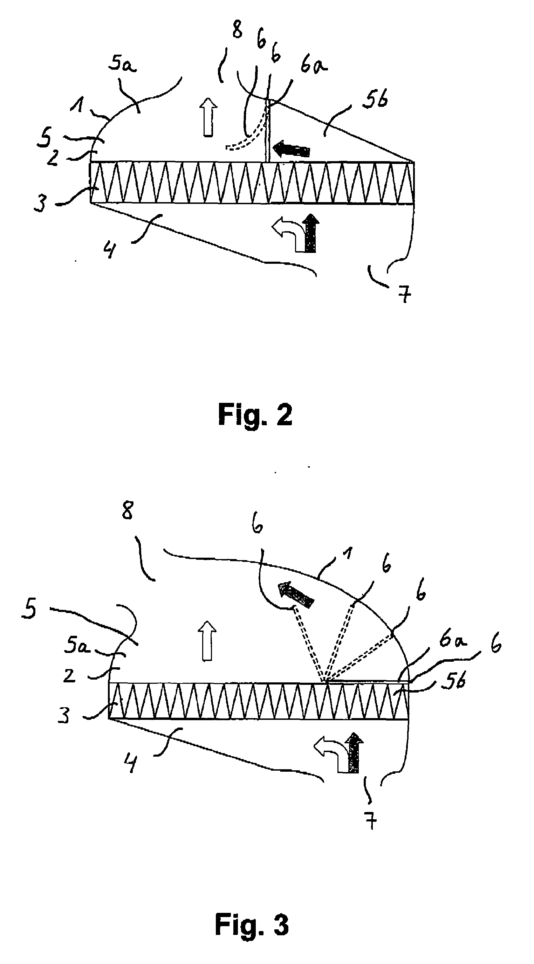

Das Trennelement 6 gemäß Fig. 1 und Fig. 2 ist verbiegbar ausgestaltet. Die an der Arbeitsfläche 6a angreifende Kraft verbiegt das Trennelement 6 in Richtung des Primärraums 5a und schafft hierdurch eine Strömungsverbindung zwischen Primärraum 5a und Sekundärraum 5b. Die Kraft wird dadurch erzeugt, dass sich zwischen Anströmraum 4 und Abströmraum 5 eine Druckdifferenz aufbaut. Die Druckdifferenz entsteht dadurch, dass ein am Abströmkanal 8 angeordnetes Saugaggregat im Abströmraum 5 einen Unterdruck relativ zu dem im Anströmraum 4 vorherrschenden Druck aufbaut. Die entstehende Druckdifferenz erzeugt eine Kraft, die das Trennelement 6 verbiegt. Die auftretenden Druckdifferenzen gelten für alle hier beschriebenen Figuren.

In Fig. 1 ist das Trennelement 6 am Filterelement 3 befestigt. In Fig. 2 ist das Trennelement 6 am Gehäuse 1 befestigt. Das Gehäuse 1 könnte spritzgusstechnisch gefertigt sein, wobei das Trennelement 6 am Gehäuse 1 angespritzt ist.

Fig. 3 zeigt ein verschwenkbares Trennelement 6, welches am Filterelement 3 angelenkt ist. Das Trennelement 6 in allen Figuren ist als dünnes Plättchen oder Scheibe ausgestaltet. Dem freien Ende des Trennelements 6 kann eine Dichteinrichtung, insbesondere eine Dichtlippe zugeordnet sein,

Das Filterelement 3 weist einen Faltenbalg auf. Ganz konkret ist das Filterelement 3 als Flachfilter ausgestaltet, der in ein Gehäuse 1 einsetzbar ist. Dem Faltenbalg könnten Aktivkohlepartikel oder Aktivkohlefasern zugeordnet sein, um die hier beschriebene Filteranordnung zur Versorgung eines Kraftfahrzeuginnenraums zu verwenden.

In allen Figuren ist dem Gehäuse 1 ein Anströmkanal 7 zugeordnet, der den Anströmraum 4 mit Luft versorgt. Dem Abströmraum 5 ist Abströmkanal 8 zugeordnet, welcher die gefilterte Luft bzw. das gefilterte Medium dem Verbrennungsmotor eines Kraftfahrzeugs zuführt. Die in den Figuren gezeigten Pfeile zeigen den Strömungsverlauf. Die nicht ausgefüllten Pfeile zeigen den Strömungsverlauf durch den Primärraum 5a. Die ausgefüllten Pfeile zeigen den Strömungsverlauf durch den Sekundärraum 5b, wenn nämlich das Filterelement 3 bereichsweise mit Schmutzpartikeln belegt ist.

Nach einer längeren Betriebsdauer kann der Bereich des Filterelements 3, welcher den Primärraum 5a zusammen mit dem Gehäuse 1 und dem Trennelement 6 begrenzt, durch Schmutzpartikel zugesetzt oder belegt sein. In Abhängigkeit von der Belegung und Verschmutzung dieses Bereichs baut sich dann eine Druckdifferenz zwischen Anströmraum 4 und Abströmraum 5 auf, welche zu einer Öffnung der Strömungsverbindung zwischen Sekundärraum 5b und Primärraum 5a führt. Dabei ist denkbar, dass die Öffnung der Strömungsverbindung kontinuierlich in Abhängigkeit von der Größe der Druckdifferenz erfolgt.

Nach Herstellung der Strömungsverbindung zwischen Primärraum 5a und Sekundärraum 5b erfolgt die Strömung in Richtung der ausgefüllten Pfeile.

Dem Abströmkanal 8 ist ein hier nicht gezeigter Luftmassensensor zugeordnet, welcher an einem bestimmten Punkt auf der Querschnittsfläche des Abströmkanals 8 die Strömungsverhältnisse bzw. die durchtretende Luftmenge misst. Durch Extrapolation ermittelt eine Elektronik die gesamte durch den Querschnitt des Abströmkanals 8 durchtretende Luftmenge. Durch geeignete Positionierung des Trennelements 6 kann die Strömung durch die Querschnittsfläche des Abströmkanals 8 über einen langen Zeitraum vergleichmäßigt werden.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Filteranordnung zum Filtern eines fluiden Mediums, umfassend ein Gehäuse (1), welches in einem Aufnahmeraum (2) ein Filterelement (3) aufnimmt, wobei das Filterelement (3) den Aufnahmeraum (2) in einen Anströmraum (4) und einen Abströmraum (5) aufteilt, wobei der Abströmraum (5) durch ein zumindest teilweise bewegbares Trennelement (6) in einen Primärraum (5a) und einen Sekundärraum (5b) aufgeteilt ist und wobei der Primärraum (5a) und der Sekundärraum (5b) strömungsverbindbar sind,
**dadurch gekennzeichnet, dass** das Trennelement (6) eine Arbeitsfläche (6a) aufweist, an der eine durch eine zwischen Anströmraum (4) und Abströmraum (5) bestehende Druckdifferenz erzeugbare Kraft so angreifen kann, dass die Strömungsverbindung zwischen Primärraum (5a) und Sekundärraum (5b) unmittelbar über die Kraft herstellbar ist.

2. Filteranordnung nach Anspruch 1, **dadurch gekennzeichnet, dass** das Trennelement (6) verbiegbar ausgestaltet ist.

3. Filteranordnung nach Anspruch 1, **dadurch gekennzeichnet, dass** das Trennelement (6) zumindest teilweise zerbrechlich ausgebildet ist.

4. Filteranordnung nach Anspruch 1, **dadurch gekennzeichnet, dass** das Trennelement (6) verschwenkbar ausgestaltet ist.

5. Filteranordnung nach einem der Ansprüche 1 bis 4, **dadurch gekennzeichnet, dass** das Trennelement (6) am Gehäuse (1) befestigt ist.

6. Filteranordnung nach einem der Ansprüche 1 bis 5, **dadurch gekennzeichnet, dass** das Trennelement (6) am Filterelement (3) befestigt ist.

7. Filteranordnung nach einem der Ansprüche 1 bis 6, **dadurch gekennzeichnet, dass** das Trennelement (6) plättchen- oder scheibenförmig ausgestaltet ist.

8. Filteranordnung nach einem der Ansprüche 1 bis 7, **dadurch gekennzeichnet, dass** dem Trennelement (6) eine Dichteinrichtung zugeordnet ist.

9. Filteranordnung nach einem der Ansprüche 1 bis 8, **dadurch gekennzeichnet, dass** das Filterelement (3) einen Faltenbalg aufweist.

10. Filteranordnung nach einem der Ansprüche 1 bis 9, **dadurch gekennzeichnet, dass** dem Abströmraum (5) ein Abströmkanal (8) und dem Anströmraum (4) ein Anströmkanal (7) zugeordnet ist.
